# EUROPÄISCHE PATENTSCHRIFT

(11) **EP 2 432 984 B1**
(45) Veröffentlichungstag und Bekanntmachung des Hinweises auf die Patenterteilung: **06.03.2013**
(21) Anmeldenummer: 10721973.5
(22) Anmeldetag: 12.05.2010
(51) Int. Cl.: F03B 13/14, F03B 13/24

(54) **WELLENKAMMER FÜR EIN WELLENKRAFTWERK UND VERFAHREN FÜR DEREN ERSTELLUNG**
WAVE CHAMBER FOR A WAVE POWER PLANT, AND METHOD FOR PRODUCING THE SAME
CHAMBRE À HOULE DESTINÉE À UNE CENTRALE HOULOMOTRICE ET PROCÉDÉ DE RÉALISATION

(30) Priorität: 20.05.2009 DE 102009022126
(43) Veröffentlichungstag der Anmeldung: 28.03.2012
(73) Patentinhaber: Voith Patent GmbH, 89522 Heidenheim (DE)
(72) Erfinder: MAIER, Wolfgang, 89564 Nattheim (DE)
(74) Vertreter: Dr. Weitzel & Partner
(86) Internationale Anmeldenummer: PCT/EP2010/002895
(87) Internationale Veröffentlichungsnummer: WO 2010/149249

(56) Entgegenhaltungen:
- EP-B1- 1 802 814
- WO-A2-2006/037983
- JP-A- 11 201 014
- JP-A- 2008 095 569
- US-A1- 2008 088 133

## Beschreibung

Die Erfindung betrifft eine Wellenkammer für ein Wellenkraftwerk und ein Verfahren für deren Erstellung.

Zur Energiegewinnung aus Meereswellen kann deren Bewegungsenergie mittels einer Wellenkammer wenigstens teilweise in eine Luftströmung umgewandelt werden. Beispielhaft wird auf die US 5,191,225 verwiesen, die ein Wellenkraftwerk, das nach dem Prinzip einer oszillierenden Wassersäule arbeitet, beschreibt. Ist die Wassereintrittsöffnung zur Wellenkammer unter dem Wasserspiegel angeordnet und liegt ein in der Wellenkammer eingeschlossenes Luftvolumen vor, so wird im Takt der anbrandenden Wellen der Wasserstand innerhalb der Wellenkammer eine gedämpfte Schwingung ausführen. Zur Energieentnahme ist in einem zum Luftraum in der Wellenkammer reichenden Belüftungskanal eine Luftturbine angeordnet. Hierzu wird bevorzugt eine bidirektional arbeitende Turbine, insbesondere eine gleichsinnig umlaufende Turbine, wie eine Wells-Turbine, verwendet.

Zur effizienten Energiegewinnung aus Meereswellen müssen Wellenkammern eine gewisse Größe aufweisen, um Schwankungen des mittleren Meereswasserspiegels auszugleichen. Des Weiteren müssen Wellenkammern für hohe Belastungen durch die einlaufende See ausgelegt sein. Zusätzlich erschwert wird deren Errichtung durch den permanent starken Wellengang in für Wellenkraftwerke geeigneten Gebieten. Zur Umgehung dieser Problematik wurde durch die US 4,613,252 vorgeschlagen, eine Wellenkammer hinter der schützenden Barriere eines Küstenfelsens im Trockenen zu errichten und erst nach deren Fertigstellung die Zugangsöffnung für das Meereswasser freizusprengen.

Des Weiteren sind aus JP 60119379 A, US 4,564,312 und EP 1 802 814 B1 Wellenkammern bekannt, die mit dem Schutz von Häfen oder von Küstenabschnitten dienenden Wellenbrechern, in Verbindung stehen. Vielfach besteht jedoch keine Möglichkeit der Anlage an einer bestehenden künstlichen oder natürlichen, in die Brandung ragenden Abstützung. Zum einen können Naturschutzauflagen, eine nicht ausreichende Wassertiefe oder eine unzureichende Gesteinsqualität exponierter Felsen gegen eine Errichtung einer Wellenkammer unmittelbar an Küsten sprechen. Zum anderen stellt sich im Falle künstlich angelegter Wellenbrecher die Frage, ob eine wirtschaftlich sinnvolle Kombination von Wellenschutzfunktion und Wellenenergienutzung möglich ist.

Freistehende Wellenkammern, die standsicher auf dem Meeresgrund verankert sind, umgehen die voranstehend genannten Schwierigkeiten. Allerdings ist deren Errichtung unter den Bedingungen ständigen Wellengangs konstruktiv aufwendig. Entsprechend wird durch die JP 1218492 A vorgeschlagen, eine in einem Trockendock als einstückiges Betonteil hergestellte Wellenkammer durch Auftriebskörper für den Transport schwimmfähig auszubilden und so die Wellenkammer als Ganzes zum Installationsort zu transportieren. Auch diese Art der Erstellung ist aufwendig und kann zu Folgeproblemen bei der Gründung eines vorgefertigten Wellenkammerelements auf dem Meeresboden führen.

Das Dokument JP 11-201014 A offenbart eine Wellenkammer gemäß dem Oberbegriff des Anspruchs 1. Der Erfindung liegt die Aufgabe zugrunde, die voranstehend genannten Probleme zu überwinden und eine freistehende Wellenkammer für ein Wellenkraftwerk anzugeben, die auch bei Wellengang sicher mit einem einfachen Installationsfahrzeug errichtet werden kann. Dabei soll sich die Wellenkammer durch eine hohe Standzeit und eine konstruktiv einfache Skalierbarkeit auszeichnen. Des Weiteren ist bei der Erstellung der Wellenkammer auf den Einsatz von Tauchern zu verzichten.

Die voranstehend genannte Aufgabe wird durch die Merkmale der unabhängigen Ansprüche gelöst. Vorteilhafte Ausgestaltungen ergeben sich aus den Unteransprüchen.

Die erfindungsgemäße Wellenkammer umfasst mehrere vertikal gestapelte Kammersegmente, die beispielsweise als standardisierte Fertigbetonbauteile ausgebildet sein können, sodass die Höhenerstreckung der Wellenkammer an die jeweilige Wassertiefe angepasst werden kann. Dabei wird der Stapel der Kammersegmente über eine Vielzahl von Zugelementen vertikal verspannt sowie kipp- und schubsicher auf dem Meeresboden verankert. Ferner sind durch den modulweisen Aufbau der Wellenkammer deren Einzelteile mittels eines einfachen Schiffskrans handhabbar.

Gemäß einer vorteilhaften Ausgestaltung der Erfindung ist wenigstens ein Teil der Zugelemente wenigstens mittelbar im Gewässergrund verankert. Besonders bevorzugt erfolgt die Verankerung für einen felsigen Gewässergrund mit Bohrankern. Dabei ist besonders vorteilhaft, wenn die Zugelemente unmittelbar von den Bohrankern ausgehend in an den Kammersegmenten angelegten Führungen verlaufen. Für eine mögliche Gestaltung sind die Führungen in Form von Durchgangsöffnungen angelegt, die in Stapelrichtung in den Wandungen der Kammersegmente verlaufen. Für diesen Fall dienen die Zugelemente bei der Erstellung gleichzeitig als Positionierungshilfe für das Stapeln der Kammersegmente. Dabei werden die Kammersegmente vor dem Absetzen auf dem Stapel auf wenigstens einen Teil der Zugelemente aufgefädelt, wobei diese so unter Spannung gesetzt werden, dass die Kammersegmente beim Absetzen gegen den Wellendruck seitlich geführt werden. Zusätzlich kann die Positionierung der Kammersegmente relativ zueinander durch Selbstzentrierungseinrichtungen an den Stoßflächen aneinandergrenzender Kammersegmente unterstützt werden. Die endgültige Zentrierung erfolgt für eine vorteilhafte Ausgestaltung über die Zugelemente, die zu diesem Zweck eine der Stapelhöhe der Kammersegmente entsprechende Länge aufweisen, um die gestapelten Kammersegmente zu einer monolithischen Einheit durch eine Vertikalkraftbeaufschlagung zu verspannen.

Wird die Verankerung der Zugelemente der Wellenkammer durch Bohranker ausgeführt, dient in vorteilhafter Weise ein Gründungselement, auf dem der Stapel der Kammersegmente errichtet wird, zugleich als Zentriereinrichtung für die Erstellung der Bohranker. Gemäß einer möglichen Ausgestaltung weist zu diesem Zweck das Gründungselement Führungsöffnungen auf, die das Bohrmuster für die Bohranker vorgeben. Dabei entspricht das Bohrmuster der Anordnung der an den Kammersegmenten angelegten Führungen für die Zugelemente, sodass ein Auffädeln der Kammersegmente und ein Absenken entlang der Zugelemente möglich sind.

Für eine Weitergestaltung der Erfindung wird zum Abfangen der auf die Wellenkammer wirkenden Schubkräfte eine im Gewässergrund verankerte Schubsicherung verwendet. Vorteilhafterweise stellt diese eine separate Komponente dar. Alternativ besteht die Möglichkeit, die Schubsicherung und die Verankerung für die Zugelemente zu vereinigen.

Für eine besonders bevorzugte Ausgestaltung umfasst die Schubsicherung ein in den Gewässergrund eingebrachtes Hohlelement. Dies kann beispielsweise ein Stahlrohr sein, das in den Gewässergrund eingedreht wird. Sodann erfolgt ein Ablängen des Hohlelements, sodass sich dieses bis zu einer vorbestimmten Höhe über den Gewässergrund erstreckt. In einem nachfolgenden Erstellungsschritt entsteht ein sich gegen eine Anlagefläche der Schubsicherung, typischerweise die Umfangsfläche, abstützendes Gründungselement, auf dem das unterste Kammersegment abgesetzt wird. Bevorzugt gehen vom Gründungselement, wie voranstehend dargelegt, die Zugelemente aus oder es dient als Zentrierungseinrichtung für die Ausbildung der Verankerung der Zugelemente.

Ferner wird vorzugsweise nach dem Absetzen des untersten Kammersegments auf dem Gründungselement eine Schubverbindung zur Schubsicherung hergestellt. Im einfachsten Fall wird hierzu durch ein Ausgießen eines Zwischenbereichs zwischen der Kammersegmentwandung des untersten Kammersegments und einer Anlagefläche der Schubsicherung eine Verbindung zur Ableitung von Querkräften hergestellt. Denkbar ist ferner die Verwendung einer längeneinstellbaren Schubsicherung, die eine Einrichtung des Abstands zwischen der Kammersegmentwandung des untersten Kammersegments und der Schubverbindung ermöglicht.

Nachfolgend wird die Erfindung anhand von Ausführungsbeispielen in Verbindung mit Figurendarstellungen genauer erläutert. In diesen ist im Einzelnen Folgendes dargestellt:
- Figur 1: zeigt eine erfindungsgemäße Wellenkammer im Längsschnitt.
- Figur 2: zeigt die Ausbildung der Gründung der Wellenkammer aus Figur 1.
- Figur 3: zeigt das Aufsetzen eines Kammersegments entlang der durch die Zugelemente vorgegebenen Führung für die Wellenkammer aus Figur 1.
- Figur 4: zeigt eine erfindungsgemäße Wellenkammer gemäß einer Ausgestaltungsalternative im Längsschnitt.

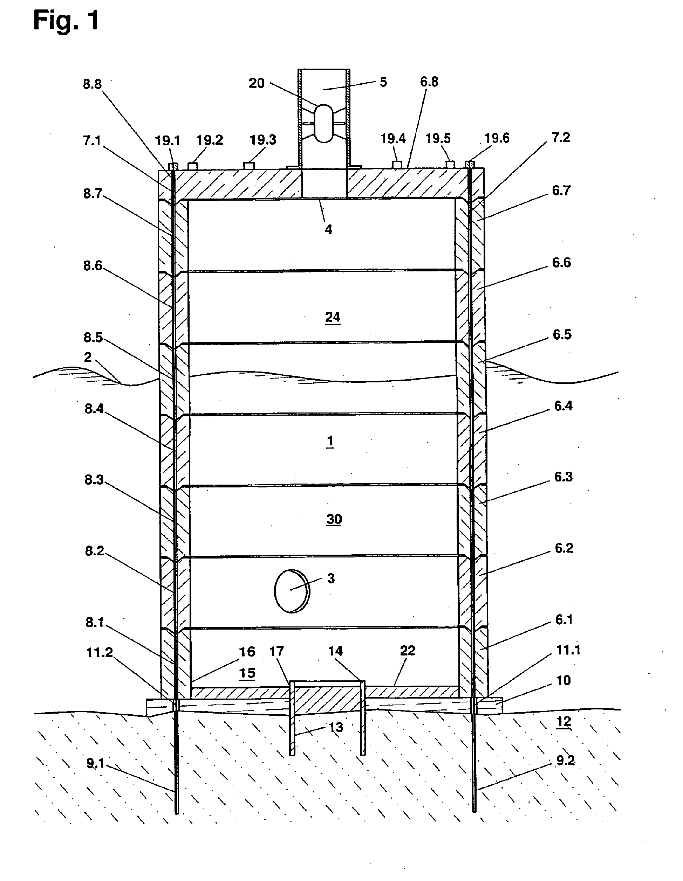

Figur 1 zeigt schematisch vereinfacht eine erfindungsgemäße Wellenkammer 1, einen sich gegen den Gewässergrund 12 abstützenden, freistehende Stapel 30 aus mehreren Kammersegmenten 6.1, ..., 6.8 umfasst, welche als ringförmige Elemente aus seewasserfestem, armierten Beton hergestellt sind. Diese werden über eine Vielzahl von Zugelementen 7.1, 7.2 vertikal verspannt, wobei die Zugelemente 7.1, 7.2 über Bohranker 9.1, 9.2 im Gewässergrund 12 fixiert sind und vorteilhafterweise über die gesamte Vertikalerstreckung der Wellenkammer 1 reichen. Die Wassereintrittsöffnung 3 zur Wellenkammer 1 ist im Kammersegment 6.2 vorgesehen. Der Luftraum 24 innerhalb der Wellenkammer 1 mündet an einem Auslass 4 im als Deckel verwendeten Kammersegment 6.8 in einen Belüftungskanal 5, in dem eine Luftturbine 20, beispielsweise eine Wells-Turbine, angeordnet ist.

Für die dargestellte, vorteilhafte Ausgestaltung verlaufen die Zugelemente 7.1, 7.2 in Führungen in Form von Durchgangsöffnungen, die in den Wandungen der Kammersegmente 6.1, ..., 6.8 ausgebildet sind. In Figur 1 sind exemplarische Durchgangsöffnungen entlang des Zugelements 7.1 mit den Bezugszeichen 8.1, ..., 8.8 bezeichnet. Werden wenigstens zwei solchermaßen verlaufende Zugelemente 7.1, 7.2 und bevorzugt mehr als zwei, äquidistant über die Mantelfläche der Kammer 1 verteilte Zugelemente 7.1, 7.2 verwendet, resultiert eine Querführung beim Absetzen einzelner Kammersegmente 6.1, ..., 6.8. Die endgültige Querzentrierung erfolgt über eine Längsverspannung der Zugelemente 7.1, 7.2. Dabei wird die relative Ausrichtung aneinandergrenzender Kammersegmente 6.1, ..., 6.8 durch Selbstzentrierungseinrichtungen 23 an den Stoßbereichen der Kammersegmente 6.1, ..., 6.8 unterstützt.

Figur 1 zeigt ferner eine Schubsicherung 13 in Form eines in den Gewässergrund eingebrachten Hohlelements 14. Durch einen ausgegossenen Zwischenbereich 15 zwischen der Kammersegmentwandung 16 des untersten Kammersegments 6.1 und einer Anlagefläche 17, vorliegend der Außenwandung des Hohlelements 14, entsteht eine Schubverbindung 22 zum vertikal verspannten Stapel 30 der Kammersegmente 6.1, ..., 6.8.

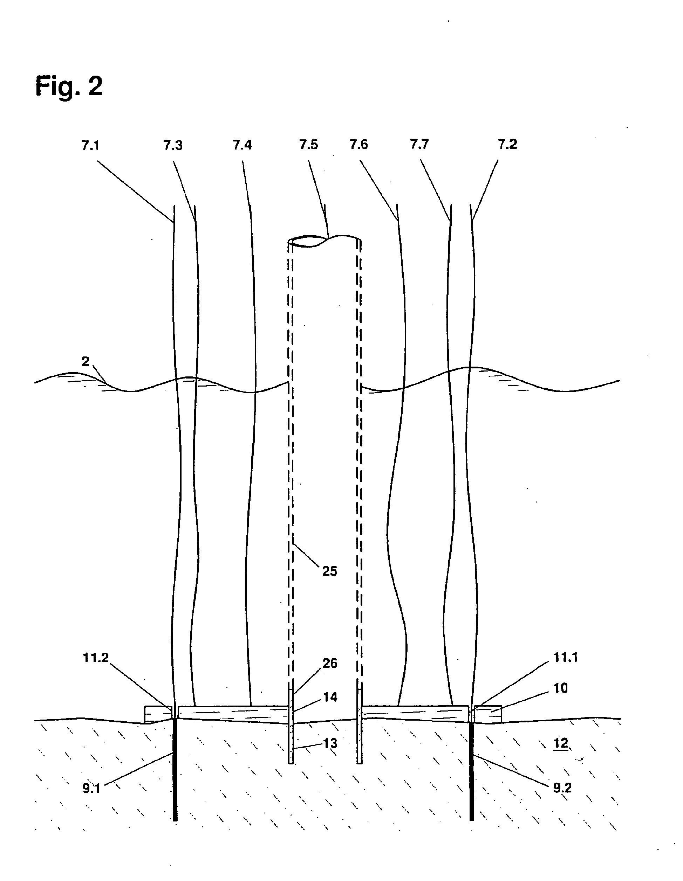

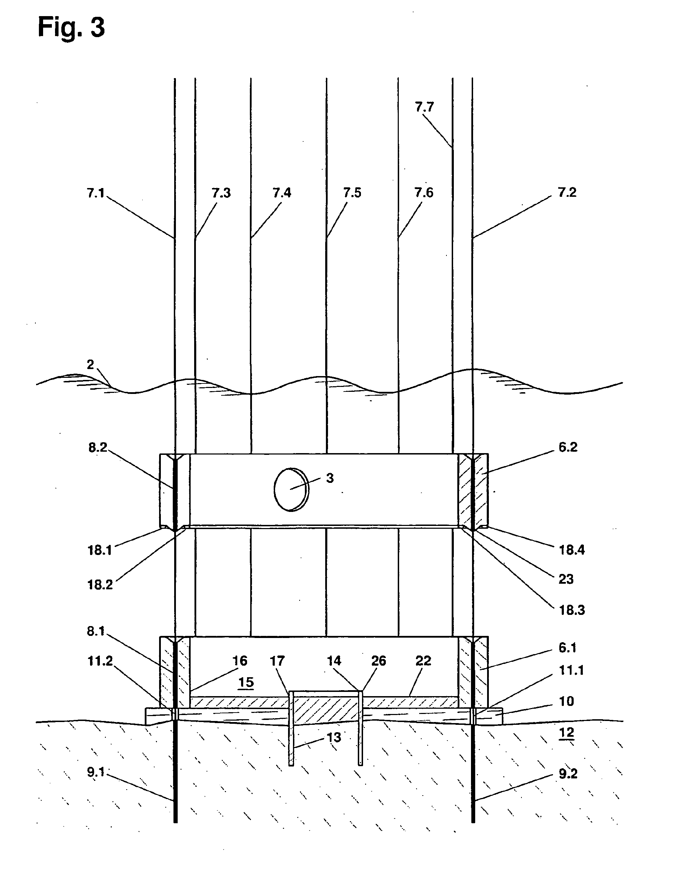

Nachfolgend wird ein bevorzugtes Verfahren zur Erstellung der erfindungsgemäßen Wellenkammer anhand der Figuren 2 und 3 dargelegt: Zunächst wird ein Stahlrohr 25 bis zu einer vorbestimmten Tiefe in den Gewässergrund 12 eingedreht. Dieses Stahlrohr 25 dient als vorübergehende Gründung. Um diese wird auf dem Gewässergrund 12 ein Gründungselement 10 angelegt, auf dem später der Stapel der Kammersegmente 6.1, ...,6.8 aufgesetzt wird. Als Gründungselement 10 kann ein vorgefertigtes, ringförmiges Betonelement verwendet werden, das entlang des Stahlrohrs 25 abgesenkt wird. Dabei werden geeignete Maßnahmen zur waagrechten Ausrichtung der Standfläche für die Kammersegmente ausgeführt. Entsprechend kann ein vorgefertigtes Gründungselement 10 Hubvorrichtungen umfassen, die sich gegen den Gewässergrund 12 abstützen. Des Weiteren können zusätzlich etwaige unter einem Gründungselement 10 nach dem Absetzen vorliegende Hohlräume auszementiert werden. Alternativ wird das Gründungselement 10 vor Ort gegossen. Des Weiteren kann in Abhängigkeit der Beschaffenheit des Gewässergrunds 12 das Gründungselement 10 mit einem Unterspülschutz versehen sein, der im Einzelnen nicht in den Figuren dargestellt ist.

Gemäß einer vorteilhaften Ausgestaltung werden für die Zugelemente 7.1, ..., 7.7 in einem vorbestimmten Muster Bohranker 9.1, 9.2 gesetzt. Bevorzugt dient hierzu das Gründungselement 10 als Schablone, indem dieses Zentriereinrichtungen 11.1, 11.2 zum Setzen der Bohranker 9.1, 9.2 umfasst. Im Falle eines auf dem Gewässergrund 12 gegossenen Gründungselements 10 werden zur Ausbildung der Zentriereinrichtungen 11.1, 11.2 Hülsenelemente entsprechend zum gewünschten Bohrmuster in die Schalung eingesetzt. Im Fall eines vorgefertigten Gründungselements 10 sind die als Zentriereinrichtungen 11.1, 11.2 dienenden Durchgangsöffnungen bereits angelegt.

In einem weiteren Verfahrensschritt wird das Stahlrohr 25, das für die vorliegende Ausgestaltung als Schubsicherung 13 dient, so abgelängt, dass ein über das Gründungselement 10 hinausstehender Kragen 26 stehen bleibt. Entsprechend sind in Figur 2 die abzutrennenden Teile des Stahlrohrs 25 gestrichelt dargestellt. Dabei dient der Kragen 26 zur Ausbildung einer Schubverbindung 22. Deren Realisierung wird anhand von Figur 3 erläutert: Nach dem Absetzen des untersten Kammersegments 6.1 auf dem Gründungselement 10 wird der Zwischenbereich 15 zwischen der Kammersegmentwandung 16 auf der Innenseite des untersten Kammersegments 6.1 und der Anlagefläche 17 am Kragen 26 auszementiert. Entsprechend kann der Innenbereich der Schubsicherung 13 ausgegossen werden. Gemäß einer bevorzugten Variante erfolgt das Ablängen des Stahlrohrs 25 erst nach dem Aufstapeln der Kammersegmente 6.1, ..., 6.8, die die Seitenwandungen der Wellenkammer 1 bilden, sodass es für diese als Hilfe zur Führung und Ausrichtung beim Absenken dienen kann.

Alternativ wird eine einstellbare Schubverbindung verwendet, die im Einzelnen nicht in den Figuren dargestellt ist. Eine solche kann dazu dienen, das unterste Kammersegment 6.1 auf dem Gründungselement 10 nach dem Absetzen relativ zur Schubsicherung 13 zu zentrieren. Nach der Einstellung kann zusätzlich ein Ausgießen des Zwischenbereichs 15 ausgeführt werden. Alternativ wird durch eine Fixierung der einstellbaren Schubverbindung 22 die auf das Kammersegment 6.1 im späteren Betrieb wirkende Querkraft abgefangen.

Das Absetzen der einzelnen Kammersegmente 6.1, 6.8 erfolgt entlang der Zugelemente 7.1, ..., 7.7, die zu diesem Zweck durch eine im Einzelnen nicht gezeigte Vorrichtung auf einem für die Installation verwendeten Wasserfahrzeug vorgespannt sind. Ersichtlich in Figur 3 ist das Absenken des Kammersegments 6.2 auf das unterste Kammersegment 6.1 mittels eines nicht dargestellten Schiffskrans. Dabei verlaufen die Zugelemente 7.1,..., 7.7 in Durchgangsöffnungen 8.1, 8.2 in den Kammersegmenten 6.1, 6.2. Demnach wird ein Kammersegment vor dem Absetzen auf wenigstens zwei Zugelemente 7.1, ..., 7.7 aufgefädelt.

Des Weiteren sind in Figur 3 an den Stoßstellen zwischen den Kammersegmenten 6.1, 6.2 im Bereich der Selbstzentrierungseinrichtung 23 Dichtungen 18.1, ... , 18.4 skizziert, die durch das Eigengewicht des Kammersegmentes 6.2 sowie durch die vertikale Verspannung über die Zugelemente 7.1, ..., 7.7 im Endmontagezustand zur wasser- und luftundurchlässigen Abdichtung dienen. Alternativ kann anstatt zwischenliegender Dichtungen 18.1, ..., 18.4 nach dem Erstellen und Verspannen des Stapels aus Kammersegmenten 6.1,...,6.8 ein integrales, über die gesamte Außen- und Innenwandung des Stapels reichendes Dichtungselement oder ein dichtender Anstrich aufgebracht werden. Derartige Arbeiten können bei einer geschlossenen Wassereintrittsöffnung 3 und einem ausgepumpten Innenbereich der Wellenkammer 1 ausgeführt werden nachdem das als Abdeckung verwendete Kammersegment 6.8 aufgesetzt und die Zugelemente 7.1,...,7.7 mittels der Spannelemente 19.1, ..., 19.6 verspannt sind.

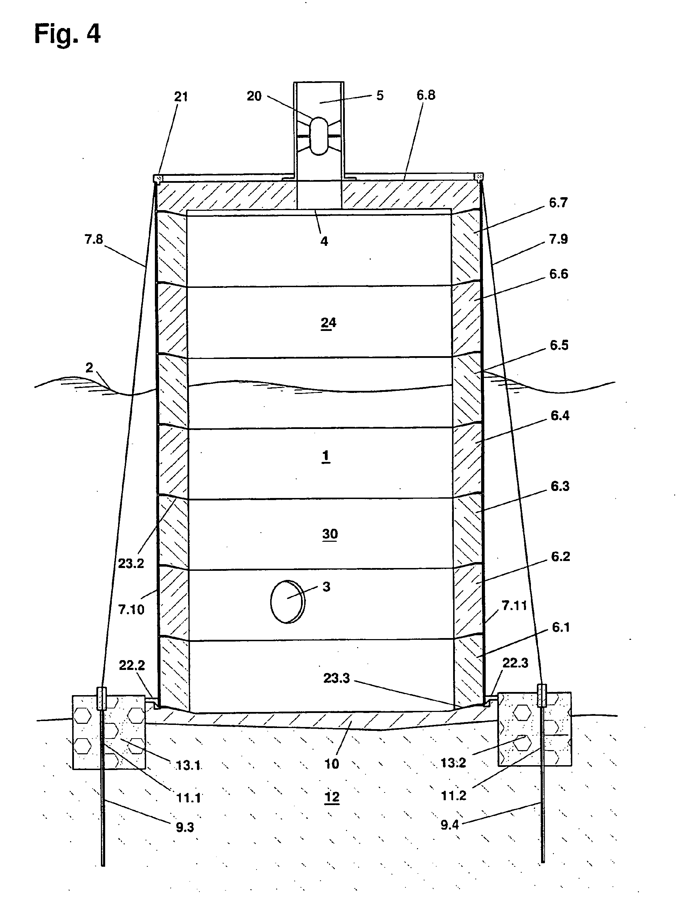

Figur 4 zeigt eine Ausgestaltungsalternative für eine erfindungsgemäße Wellenkammer, für die schrägverlaufende Zugelemente 7.8, 7.9 verwendet werden. Diese erzeugen eine vertikale Verspannung im Sinne einer Vertikalkraftkomponente auf die Kammersegmente 6.1, ..., 6.8. Dabei gehen die Zugelemente 7.8, 7.9 von Betonelementen aus, die als Schubsicherung 13.1, 13.2 dienen und welche ein durch Vergießen angelegtes Gründungselement 10 außen umgeben. Für die Herstellung des Gründungselements 10 können die in den Gewässergrund 12 eingebetteten Schubsicherungen 13.1, 13.2 als Schalung verwendet werden.

Des Weiteren können die Schubsicherungen 13.1, 13.2 als Zentriereinrichtungen 11.1, 11.2 zum Setzen von Bohrankern 9.3, 9.4 dienen. Für die dargestellte Ausführungsform gehen die Zugelemente 7.8, 7.9 von den Bohrankern 9.3, 9.4 aus. Alternativ kann in Abhängigkeit der Beschaffenheit des Gewässergrunds 12 eine Verspannung ohne Bohranker 9.3, 9.4 unmittelbar an den seitlich angeordneten Schubsicherungen 13.1, 13.2 erfolgen, sodass durch eine entsprechende Dimensionierung der Schubsicherung 13.1, 13.2 sowie des Gründungselements 10 ein im Einzelnen nicht dargestelltes Schwerkraftfundament ausgebildet wird.

Ferner sind in Figur 4 parallel zur Außenwandung der Kammersegmente 6.1, ..., 6.8 verlaufende Zugelemente 7.10, 7.11 dargestellt, durch die zusätzlich ein vertikales Verspannen des Stapels der Kammersegmente 6.1, ..., 6.8 möglich ist. Ferner dienen diese parallel zur Wellenkammeraußenwandung verlaufenden Zugelemente 7.10, 7.11 der Positionierung der einzelnen Kammersegmente 6.1, ..., 6.8 beim Absetzen. So können an Außenwandungen der Kammersegmente 6.1, ..., 6.8 Führungen, die mit Zugelementen 7.10, 7.11 zusammenwirken, vorgesehen sein. Diese sind im Einzelnen nicht in Figur 4 dargestellt. Die Außenführung der Zugelemente 7.10, 7.11 ermöglicht eine vereinfachte Ausbildung der Selbstzentrierungseinrichtung 23.2 für die Kammersegmente 6.1, ..., 6.8 als konische Flächen sowie die Verwendung flächiger Dichtungselemente. Des Weiteren kann die Errichtung einer erfindungsgemäßen Wellenkammer dadurch vereinfacht werden, dass zunächst die einzelnen Kammersegmente 6.1, ..., 6.8 ohne die Zugelemente 7.8, ..., 7.11 aufeinandergestapelt werden. Dazu ist zusätzlich zur Selbstzentrierungseinrichtung 23.2 zwischen den einzelnen Kammersegmenten 6.1, 6.8 eine Selbstzentrierungseinrichtung 23.3 für das Aufsetzen des untersten Kammersegments 6.1 auf dem Gründungselement 10 vorgesehen.

In einem nachfolgenden Verfahrensschritt wird die endgültige Sicherung der gestapelten Kammersegmente 6.1, ..., 6.8 mittels der voranstehend dargelegten außen verlaufenden Zugelemente 7.8, ..., 7.11 vorgenommen. Sodann erfolgt die Komplettierung der Wellenkammer 1 durch die Anlage einer Schubverbindung 22.1, 22.2 zwischen den außenliegenden Schubsicherungen 13.1, 13.2 und dem Außenumfang des untersten Kammersegments 6.1.

Weitere Ausgestaltungen der Erfindung sind denkbar. Dabei ist es möglich, die vertikal gestapelten Kammersegmente 6.1, ..., 6.8 durch Längsteilung in einzelne Teilkomponenten aufzuteilen. Ferner können zwischen einzelnen Kammersegmenten 6.1, 6.8 Zwischenelemente vorgesehen sein, die zusätzlich zur Abdichtungsfunktion Querkräfte auffangen.

### Bezugszeichenliste

- 1: Wellenkammer
- 2: Wasserspiegel
- 3: Wassereintrittsöffnung
- 4: Auslass
- 5: Belüftungskanal
- 6.1, ..., 6.8: Kammersegment
- 7.1, ... , 7.11: Zugelement
- 8.1, ..., 8.8: Durchgangsöffnungen
- 9.1, 9.2, 9.3, 9.4: Bohranker
- 10: Gründungselement
- 11.1, 11.2: Zentriereinrichtungen
- 12: Gewässergrund
- 13, 13.1, 13.2: Schubsicherung
- 14: Hohlelement
- 15: Zwischenbereich
- 16: Kammersegmentwandung
- 17: Anlagefläche
- 18.1, ..., 18.4: Dichtung
- 19.1, ..., 19.6: Spannelement
- 20: Luftturbine
- 21: Spannring
- 22, 22.1,22.2: Schubverbindung
- 23, 23.2, 23.3: Selbstzentrierungseinrichtung
- 24: Luftraum
- 25: Stahlrohr
- 26: Kragen
- 30: Stapel

## Patentansprüche

1. Wellenkammer (1) für ein Wellenkraftwerk mit einer unter dem Wasserspiegel (2) liegenden Wassereintrittsöffnung (3) und einem Auslass (4) zu einem Belüftungskanal (5), in dem eine Luftturbine (20) angeordnet ist; **dadurch gekennzeichnet, dass** die Wellenkammer (1) einen sich gegen den Gewässergrund (12) abstützenden, freistehende Stapel (30) aus mehreren Kammersegmenten (6.1, ..., 6.8) umfasst, die über eine Vielzahl von Zugelementen (7.1, ... , 7.11) vertikal verspannt sind.

2. Wellenkammer (1) nach Anspruch 1, **dadurch gekennzeichnet, dass** die Zugelemente (7.1, ..., 7.11) über die gesamte Vertikalerstreckung des Stapels (30) der Kammersegmente (6.1, ..., 6.8) reichen.

3. Wellenkammer (1) nach einem der Ansprüche 1 oder 2, **dadurch gekennzeichnet, dass** die Zugelemente (7.1, ... , 7.11) in Führungen an den Kammersegmenten (6.1, ..., 6.8) verlaufen.

4. Wellenkammer (1) nach Anspruch 3, **dadurch gekennzeichnet, dass** die Führungen als Durchgangsöffnungen (8.1, ..., 8.8) in den Wandungen der Kammersegmente (6.1, ..., 6.8) angelegt sind.

5. Wellenkammer (1) nach einem der vorausgehenden Ansprüche, **dadurch gekennzeichnet, dass** die Zugelemente (7.1, ..., 7.11) wenigstens mittelbar über Bohranker (9.1, ..., 9.4) im Gewässergrund (12) verankert sind.

6. Wellenkammer (1) nach Anspruch 5, **dadurch gekennzeichnet, dass** das unterste Kammersegment (6.1) auf einem Gründungselement (10) ruht, das eine Zentriereinrichtungen (11.1,...,11.4) für Bohranker (9.1, 9.2) umfasst.

7. Wellenkammer (1) nach einem der vorausgehenden Ansprüche, **dadurch gekennzeichnet, dass** das unterste Kammersegment (6.1) wenigstens mittelbar mit einer im Gewässergrund (12) verankerten Schubsicherung (13, 13.1, 13.2) in Verbindung steht.

8. Wellenkammer (1) nach Anspruch 7, **dadurch gekennzeichnet, dass** die Schubsicherung (13, 13.1, 13.2) ein in den Gewässergrund (12) eingebrachtes Hohlelement (14) umfasst.

9. Wellenkammer (1) nach Anspruch 8, **dadurch gekennzeichnet, dass** das Hohlelement (14) innerhalb des untersten Kammersegments (6.1) angeordnet ist.

10. Wellenkammer (1) nach einem der Ansprüche 7 - 9, **dadurch gekennzeichnet, dass** in einem Zwischenbereich (15) zwischen einer Kammersegmentwandung (16) des untersten Kammersegments (6.1) und einer Anlagefläche (17) der Schubsicherung (13, 13.1, 13.2) eine Schubverbindung (22, 22.1, 22.2) angeordnet ist.

11. Wellenkammer (1) nach einem der vorausgehenden Ansprüche, **dadurch gekennzeichnet, dass** die Kammersegmente (6.1, ... , 6.8) als Fertigbetonbauteile ausgebildet sind.

12. Verfahren zur Herstellung einer Wellenkammer (1) für ein Wellenkraftwerk mit einer unter dem Wasserspiegel (2) liegenden Wassereintrittsöffnung (3) und einem Auslass (4) zu einem Belüftungskanal (5), in dem eine Luftturbine (20) angeordnet ist mit den Verfahrensschritten 12.1 Aufstapeln mehrerer Kammersegmente (6.1, ..., 6.8) zu einem sich gegen den Gewässergrund (12) abstützenden, freistehende Stapel (30), und 12.2 Verspannen der aufgestapelten Kammersegmente (6.1, ... , 6.8) mit einer Vielzahl von Zugelementen (7.1, ..., 7.11) in vertikaler Richtung.

13. Verfahren nach Anspruch 12, **dadurch gekennzeichnet, dass** die Zugelemente (7.1, ..., 7.11) über Bohranker (9.1, ..., 9.4) im Gewässergrund (12) verankert sind, die mittels einer Zentriereinrichtung (11.1, ..., 11.2) gesetzt werden, die Teil eines Gründungselements (10) für die gestapelten Kammersegmente (6.1, ..., 6.8) ist.

14. Verfahren nach einem der Ansprüche 12 oder 13, **dadurch gekennzeichnet, dass** in den Gewässergrund (12) ein Hohlelement (14) eingebracht wird, welches zur Schubsicherung (13) dient.

15. Verfahren nach Anspruch 14, **dadurch gekennzeichnet, dass** zwischen dem untersten Kammersegment (6.1) und dem Hohlelement (14) eine Schubverbindung (22, 22.1, 22.2) hergestellt wird.

## Claims

1. Wave chamber (1) for a wave power plant comprising a water inlet (3) below the water level (2) and an outlet (4) to a venting channel (5) in which an air turbine (20) is located, **characterized in that** the wave chamber comprises a freestanding pile (30) borne by the sea bed comprising a plurality of chamber segments (6.1, ..., 6.8), which are vertically clamped together by a plurality of tension elements (7.1, ..., 7.11).

2. Wave chamber (1) according to claim 1, **characterized in that** the tension elements (7.1, ..., 7.11) extend over the total vertical length of the pile (30) of the chamber segments (6.1, ..., 6.8).

3. Wave chamber (1) according to one of claims 1 or 2, **characterized in that** the tension elements (7.1, ..., 7.11) are housed in guide devices at the chamber segments (6.1, ..., 6.8).

4. Wave chamber (1) according to claim 3, **characterized in that** the guide devices are in the form of through holes (8.1, ..., 8.11) in the walls of the chamber segments (6.1, ..., 6.8).

5. Wave chamber (1) according to one of the preceding claims, **characterized in that** the tension elements (7.1, ..., 7.11) via anchors (9.1, ..., 9.4) at least indirectly are fastened in the ground (12).

6. Wave chamber (1) according to claim 5, **characterized in that** the lower most chamber segment (6.1) is based on a foundation element (10) which comprises a centring device (11.1, ..., 11.4) for anchors (9.1, 9.2).

7. Wave chamber (1) according to one of the preceding claims, **characterized in that** the lower most chamber segment (6.1) at least indirectly is connected to a thrust securing device (13, 13.1, 13.2), anchored in the ground (12).

8. Wave chamber (1) according to claim 7, **characterized in that** the thrust securing device (13, 13.1, 13.2) comprises a hollow element (14) inserted into the ground (12).

9. Wave chamber (1) according to claim 8, **characterized in that** the hollow element (14) is located inside the lower most chamber segment (6.1).

10. Wave chamber (1) according to one of claims 7 to 9, **characterized in that** a thrust connection (22, 22.1, 22.2) is arranged in an intermediate region (15) between a chamber segment wall (16) of the lower most chamber segment (6.1) and an abutting face (17) of the thrust securing device (13, 13.1, 13.2).

11. Wave chamber (1) according to one of the preceding claims, **characterized in that** the chamber segments (6.1, ..., 6.8) are in the form of prefabricated concrete parts.

12. Method for the manufacture of a wave chamber (1) for a wave power plant comprising a water inlet (3) below the water level (2) and an outlet (4) to a venting channel (5) in which there is located an air turbine (20), comprising the following steps:
12.1 piling up a plurality of chamber segments (6.1, ..., 6.8) in order to obtain a freestanding pile (30) supported on the ground (12), and
12.2 clamping together the piled chamber segments (6.1, ..., 6.8) by means of a plurality of tension elements (7.1, ..., 7.11) in vertical direction.

13. Method according to claim 12, **characterized in that** the tension elements (7.1, ..., 7.11) are anchored in the grounds by means of anchors (9.1, ..., 9.4) which are positioned by means of a centring device (11.1, ..., 11.2) which is part of foundation elements (10) for the piled up chamber segments (6.1, ..., 6.8).

14. Method according to one of claims 12 or 13, **characterized in that** there is a hollow element (14) inserted into the ground (12) as a thrust securing device (13).

15. Method according to claim 14, **characterized in that** between the lower most chamber segment (6.1) and the hollow element (14) there is provided a thrust connection (22, 22.1, 22.2).

## Revendications

1. Chambre à vagues (1) pour une centrale marémotrice pourvue d'un orifice d'entrée d'eau (3) situé sous l'eau et d'une sortie (4) dirigée vers un canal d'aération (5), dans lequel une turbine à air (20) est disposée; **caractérisée en ce que** la chambre à vagues (1) contient un empilement (30) autonome, s'appuyant sur le fond de la mer (12), composé de plusieurs segments de chambre (6.1, ... 6.8), tendus verticalement par une pluralité d'éléments de traction (7.1, 7.11).

2. Centrale marémotrice (1) selon la revendication 1, **caractérisée en ce que** les éléments de traction (7.1, ..., 7.11) couvrent toute la distance verticale de l'empilement (30) des segments de chambre (6.1, 6.8).

3. Chambre à vagues (1) selon l'une quelconque des revendications 1 à 2, **caractérisée en ce que** les éléments de traction (7.1, ... 7.11) circulent dans des guidages au niveau des segments de chambre (6.1, ..., 6.8).

4. Chambre à vagues (1) selon la revendication 3, **caractérisée en ce que** les guidages sont conçus comme comme des ouverture de passage (8.1, ..., 8.8) dans les parois des segments de chambre (6.1, ..., 6.8).

5. Chambre à vagues (1) selon l'une quelconque des revendications précédentes, **caractérisée en ce que** les éléments de traction (7.1, ..., 7.11) sont ancrés au moins indirectement par le biais d'ancrages pour forage (9.1, ..., 9.4) au fond de la mer.

6. Chambre à vagues (1) selon la revendication 5, **caractérisée en ce que** le segment de chambre (6.1) le plus bas repose sur un élément de fondation (10), contenant un dispositif de centrage (11.1, ..., 11.4) pour ancrage pour forage (9.1, 9.2).

7. Chambre à vagues (1) selon l'une quelconque des revendications précédentes, **caractérisée en ce que** le segment de chambre (6.1) le plus bas est lié au moins indirectement à l'aide d'un système antidérapant (13, 13.1, 13.2) ancré au fond de la mer (12).

8. Chambre à vagues (1) selon la revendication 7, **caractérisée en ce que** la sécurité contre la poussée (13, 13.1, 13.2) comprend un élément creux (14) intégré au fond de la mer (12).

9. Chambre à vagues (1) selon la revendication 8, **caractérisée en ce que** l'élément creux (14) est disposé à l'intérieur du segment de chambre le plus bas (6.1).

10. Chambre à vagues (1) selon l'une quelconque des revendications 7 à 9, **caractérisée en ce qu'**une liaison par poussée (22, 22.1, 22.2) est disposée dans une zone intermédiaire (15) entre une paroi de segment de chambre (16) du segment de chambre le plus bas (6.1) et une surface d'appui (17) de la sécurité contre la poussée (13, 13.1, 13.2).

11. Chambre à vagues (1) selon l'une quelconque des revendications précédentes, **caractérisée en ce que** les segments de chambre (6.1, ..., 6.8) sont sous forme de pièces en béton préfabriqué.

12. Procédé de fabrication d'une chambre à vagues (1) pour une centrale marémotrice pourvue d'un orifice d'entrée d'eau (3) situé sous l'eau et d'une sortie (4) dirigée vers un canal d'aération (5), dans lequel une turbine à air (20) est disposée, avec les étapes de procédé suivantes
12.1 Empilement de plusieurs segments de chambre (6.1 6.8) pour constituer une pile (30) autonome, s'appuyant sur le fond de la mer (12), et
12.2 Tension des segments de chambre (6.1, ..., 6.8) empilés avec une pluralité d'éléments de traction (7.1, ..., 7.11) dans le sens vertical.

13. Procédé selon la revendication 12, **caractérisé en ce que** les éléments de traction (7.1, ..., 7.11) sont ancrés par le biais d'ancrages pour forage (9.1, ..., 9.4) au fond de la mer, que l'on pose à l'aide d'un dispositif de centrage (11.1, ..., 11.2) faisant partie d'un élément de fondation (10) pour les segments de chambre (6.1, ..., 6.8) empilés.

14. Procédé selon l'une des revendications 12 ou 13, **caractérisé en ce qu'**un élément creux (14) est encastré au fond de la mer, élément servant à la sécurité contre la poussée (13).

15. Procédé selon la revendication 14, **caractérisé en ce qu'**une liaison par poussée (22, 22.1, 22.2) est produite entre le segment de chambre le plus bas (6.1) et l'élément creux (14).
